# EUROPÄISCHE PATENTSCHRIFT

(11) **EP 3 322 055 B1**
(45) Veröffentlichungstag und Bekanntmachung des Hinweises auf die Patenterteilung: **26.08.2020**
(21) Anmeldenummer: 16198223.6
(22) Anmeldetag: 10.11.2016
(51) Int. Cl.: H02G 3/08

(54) **ANORDNUNG MIT EINER ELEKTROINSTALLATIONSDOSE UND EINEM MIT DER ELEKTROINSTALLATIONSDOSE VERBINDBAREN ROHRADAPTER**
ASSEMBLY WITH AN ELECTRICAL INSTALLATION SOCKET AND A TUBE ADAPTER WHICH CAN BE FIXED TO THE ELECTRICAL INSTALLATION SOCKET
SYSTÈME COMPRENANT UN BOÎTIER D'INSTALLATION ÉLECTRIQUE ET TUBE INTERMÉDIAIRE POUVANT ÊTRE RELIÉ À UN BOÎTIER D'INSTALLATION ÉLECTRIQUE

(43) Veröffentlichungstag der Anmeldung: 16.05.2018
(73) Patentinhaber: Günther Spelsberg GmbH & Co. KG, 58579 Schalksmühle (DE)
(72) Erfinder: Hauck, Dirk, 58579 Schalksmühle (DE)
(74) Vertreter: Michalski Hüttermann & Partner Patentanwälte mbB

(56) Entgegenhaltungen:
- EP-A1- 1 587 196
- EP-A1- 1 863 144
- WO-A1-03/012949
- CH-A1- 708 542
- CN-U- 2 053 387
- DE-A1- 19 823 320
- DE-A1- 19 825 115

## Beschreibung

Die Erfindung betrifft eine Anordnung mit einer Elektroinstallationsdose und einem mit der Elektroinstallationsdose verbindbaren Rohradapter, insbesondere für den Betoneinbau, wobei der Rohradapter einen Rohranschlussstutzen zum Anschließen eines Leerrohres aufweist, die Elektroinstallationsdose ein Gehäuse mit mehreren Gehäusewänden aufweist und in einer Gehäusewand ein heraustrennbarerer Wandbereich vorgesehen ist.

Für die Erstellung von Zweck- und Wohnungsbauwerken ist Beton ein häufig genutzter Baustoff mit vielen positiven Eigenschaften. Beton eignet sich als Baumaterial für derartige Bauwerke besonders aufgrund seiner Werthaltigkeit, wobei Wände aus Beton Lärm entgegenwirken sowie einen natürlichen Schutz vor Hitze und Feuchte darstellen. Im Übrigen können in Form von Sichtbeton ästhetische gestalterische Funktionen erzielt werden.

Im Vergleich mit der Verwendung anderer Baumaterialien kommt es bei der Verwendung von Beton zur Erstellung derartiger Bauwerke jedoch besonders auf eine verlässliche Elektroinstallation an. Als Voraussetzung für eine derartige verlässliche Elektroinstallation müssen nämlich schon bei der Erstellung von Betondecken, -wänden und -böden Dosen und Leerrohre eingebracht werden, die später mit elektrische Einrichtungen und elektrischen Leitungen bestückt werden können. Dazu bieten die Hersteller von Elektroinstallationssystemen für den Betonbau typischerweise Programme mit unterschiedlichen Produkten, wie Einbaugehäusen, Gerätedosen, Verbindungsdosen, Kuppeldosen, Bewährungsadaptern usw. an. Diese Dosen und Gehäuse werden regelmäßig mit Leerrohren miteinander verbunden, in denen elektrische Leitungen geführt werden können. Um die Leerrohre an die Dosen und Gehäuse zu adaptieren, sind aus dem Stand der Technik verschiedene Möglichkeiten bekannt.

Aus der DE 198 25 115 A1 ist insofern eine Elektroinstallationsdose für den Betonbau bekannt, in deren Seitenwand Radialöffnungen für Rohre bzw. Rohradapter vorgesehen sind. Die Dose ist quer zu ihrer Längsachse geteilt und besteht aus zwei nachträglich miteinander verbindbaren Dosenteilen, von denen der eine Dosenteil an der Schalungswand befestigt wird. Um die Handhabung zu erleichtern, soll die Trennebene zwischen den beiden Dosenteilen im Höhenbereich der Radialöffnungen angeordnet sein, so dass sich jede Radialöffnung in zwei Öffnungsteile gliedert. Jede der beiden Öffnungsteile ist damit Bestandteil je eines der beiden zusammengehörenden Dosenteile.

Weiterhin ist aus der DE 198 23 320 A1 eine Anschlusshülse für Leerrohre bekannt, um diese an Betoninstallationsgehäusen zu adaptieren. Die Anschlusshülsen besitzen dazu Montagemittel zu ihrer Anbringung im Durchbruch des Gehäuses und außerdem Haltemittel für das in ihrem Inneren aufgenommene Leerrohr. Die Anschlusshülse ist dabei in zwei axiale Hülsenabschnitte gegliedert, wobei der erste, vordere Hülsenabschnitt radial elastisch verformbar ist und in diesem Verformungszustand in den Gehäusedurchbruch eingekoppelt werden kann. Der zweite, hintere Hülsenabschnitt dagegen ist in zwei Segmente längs geteilt. Diese Segmente sind gegeneinander beweglich und halten im zusammengefügten Zustand die Leerrohre zwischen sich fest.

Aus der EP 1 863 144 A1 ist außerdem eine Anordnung aus einer Installationsdose mit einer Wand mit einer Durchgangsöffnung, die geschlossen sein kann oder nicht, und einem Einsatzstück mit einer Tülle, die vor der Durchgangsöffnung platziert werden kann, bekannt. Die Wand umfasst erste Verbindungsmittel und das Einsatzstück umfasst zweite Verbindungsmittel, und die ersten und zweiten Verbindungsmittel wirken zusammen, um das Einsatzstück mit der Wand zu verbinden, indem das Einsatzstück in einer Einsatzrichtung in Bezug auf die Wand bewegt wird. Ein weiterer relevanter Stand der Technik ist WO03/012949A.

Diese aus dem Stand der Technik bekannten Lösungen bieten jedoch keine zufriedenstellenden und insbesondere keine flexiblen Lösungen, um eine effiziente und sichere Verbindung von Dosen und Gehäusen für die Betoninstallation mit Leerrohren zu gewährleisten.

Daher ist es die Aufgabe der Erfindung, eine flexible und verlässliche Lösung zu Adaption von Elektroinstallationsdosen mit Leerrohren anzugeben.

Diese Aufgabe wird erfindungsgemäß durch den Gegenstand des Patentanspruchs 1 gelöst. Bevorzugte Weiterbildungen der Erfindung sind in den Unteransprüchen beschrieben.

Die Erfindung liegt damit in einer Anordnung mit einer Elektroinstallationsdose und einem mit der Elektroinstallationsdose verbindbaren Rohradapter, insbesondere für den Betoneinbau, wobei der Rohradapter einen Rohranschlussstutzen zum Anschließen eines Leerrohres und einen Fügebereich mit Schneidkanten zum Verbinden mit der Elektroinstallationsdose aufweist, die Elektroinstallationsdose ein Gehäuse mit mehreren Gehäusewänden aufweist, in einer Gehäusewand ein heraustrennbarerer Wandbereich vorgesehen ist, der heraustrennbarere Wandbereich an zwei einander gegenüberliegenden Seiten mittels parallel zueinander verlaufender Sollbruchleisten an die benachbarten Bereiche der Gehäusewand angeschlossen ist und die Sollbruchleisten sich beide bis zu einem gemeinsamen Rand der Gehäusewand hin erstrecken, so dass der Rohradapter in einer Orientierung, in der der Rohranschlussstutzen von dem Gehäuse weg weist, mit jeweils einer Schneidkante am gemeinsamen Rand der Gehäusewand an jeweils eine Sollbruchleiste ansetzbar, längs der beiden Sollbruchleisten unter Heraustrennen des heraustrennbareren Wandbereichs in die Gehäusewand einschiebbar und auf diese Weise an die Elektroinstallationsdose anschließbar ist.

Es ist somit ein wesentlicher Punkt der Erfindung, dass eine Elektroinstallationsdose bereitgestellt wird, die vorerst gänzlich geschlossen sein kann, ohne bereits Anschlüsse für Leerrohre aufzuweisen. Allerdings kann die Elektroinstallationsdose erfindungsgemäß eine oder mehrere Möglichkeiten aufweisen, einen Rohradapter zum Anschließen eines Leerrohres anzubringen. Ein derartiger Rohradapter für ein Leerrohr kann durch ein einfaches und verlässliches Einschieben in eine Gehäusewand erfolgen, wobei dabei der Wandbereich der Gehäusewand, in dem der Rohradapter angeordnet wird, im Rahmen des Fügens herausgetrennt wird. Das Anbringen von Rohranschlussstutzen an die Elektroinstallationsdose ist damit sehr einfach und kann insbesondere mittels bereits mit einem Leerrohr verbundener Rohranschlussstutzen als auch mit noch freien Rohranschlussstutzen durchgeführt werden.

Die Sollbruchleisten sind am gemeinsamen Rand der Gehäusewand der Elektroinstallationsdose auf eine Weise zugänglich, dass die beiden Schneidkanten des Rohranschlussstutzens an den Sollbruchleisten angesetzt werden können, um den heraustrennbaren Wandbereich, von dem gemeinsamen Rand der Gehäusewand her, aus der Gehäusewand herauszutrennen, in die der Rohranschlussstutzen hineingeschoben wird. Dieses Hineinschieben des Rohranschlussstutzens in die Gehäusewand erfolgt vorzugsweise manuell. Die dabei aufzuwendende Kraft kann insbesondere dadurch verringert sein, dass gemäß einer bevorzugten Weiterbildung der Erfindung bei der Elektroinstallationsdose die Sollbruchleisten am gemeinsamen Rand der Gehäusewand jeweils mit einer Kerbe zur Erzielung eines Bruchimpulses beim Einschieben der Rohradapters in die Gehäusewand versehen sind. Eine derartige Kerbe erleichtert insbesondere am Anfang des Einschiebens des Rohradapters in die Gehäusewand das Heraustrennen des heraustrennbaren Wandbereichs.

Erfindungsgemäß sind maßgeblich dafür, dass der heraustrennbare Wandbereich beim Einschieben des Rohranschlussstutzens aus der Gehäusewand herausgetrennt werden kann, die beiden parallel zueinander verlaufenden Sollbruchleisten. Diese sind vorzugsweise derart dimensioniert, dass bei manuellem Einschieben des Rohranschlussstutzens durch das Zusammenwirken mit den Schneidkanten im Fügebereich des Rohranschlussstutzens, vom gemeinsamen Rand der Gehäusewand herkommend, die Sollbruchleisten gebrochen werden.

Andererseits ist es nun auch so, dass der heraustrennbare Wandbereich der Gehäusewand beim Hineinschieben des Rohranschlussstutzens in die Gehäusewand ausweichen muss. Schließlich soll statt dem heraustrennbaren Wandbereich dort in der Gehäusewand der Fügebereich des Rohranschlussstutzens angeordnet werden. Insofern ist zur Erleichterung des Einschiebens des Rohranschlussstutzens in die Gehäusewand gemäß einer bevorzugten Weiterbildung der Erfindung vorgesehen, dass bei der Elektroinstallationsdose zwischen den Sollbruchleisten an ihrem dem gemeinsamen Rand der Gehäusewand abgewandten Enden ein Filmgelenk vorgesehen ist, um dessen Schwenkachse der heraustrennbare Wandbereich beim Einschieben des Rohradapters in die Gehäusewand von den stehenbleibenden Bereichen der Gehäusewand weggeschwenkt wird. Auf diese Weise wird gewährleistet, dass der bereits herausgetrennte Wandbereich der Gehäusewand beim Einschieben des Rohradapters nicht im Wege ist und stört.

Grundsätzlich kann der heraustrennbare Wandbereich der Elektroinstallationsdose unterschiedlich ausgebildet sein. Dabei ist es insbesondere möglich, dass der heraustrennbare Wandbereich überall im Wesentlichen dieselbe Wandstärke aufweist. Gemäß einer bevorzugten Weiterbildung der Erfindung ist jedoch vorgesehen, dass bei der Elektroinstallationsdose der heraustrennbare Wandbereich einen dem gemeinsamen Rand zugewandten Verformungsbereich aufweist, der beim Einschieben des Rohradapters in die Gehäusewand leichter verformbar ist als ein sich an den Verformungsbereich anschließender, vom gemeinsamen Rand weiter entfernter Starrbereich. Mit anderen Worten sieht diese bevorzugte Weiterbildung der Erfindung also vor, dass ein erster Bereich, nämlich der Verformungsbereich, der dem gemeinsamen Rand zugewandt ist, flexibler und damit leichter verformbar ist als ein vom gemeinsamen Rand weiter entfernter Bereich, nämlich der Starrbereich. Dabei bedeutet der Begriff "Starrbereich" nicht, dass dieser Bereich vollständig starr ist. Vielmehr ist dieser Bereich lediglich weniger flexibel und damit weniger leicht verformbar als der Verformungsbereich. Mit dieser bevorzugten Weiterbildung der Erfindung wird erreicht, dass beim Einschieben des Rohradapters in die Gehäusewand der dem gemeinsamen Rand zugewandte Bereich des heraustrennbaren Wandbereichs relativ leicht "abgeschält" werden kann, während danach der auf den Verformungsbereich folgende Starrbereich annähernd ohne Verformung herausgeschwenkt wird.

Gemäß einer ganz besonders bevorzugten Weiterbildung der Erfindung ist dabei ferner vorgesehen, dass der Starrbereich einen von einer Sollbruchlinie umrandeten Durchführungsbereich aufweist. Mit dieser Ausgestaltung kann erreicht werden, dass auch in solchen Fällen, in denen an diesem grundsätzlich heraustrennbaren Wandbereich kein Rohradapter angeschlossen wird, eine Einführung eines Leerrohrs bzw. von elektrischen Leitungen in die Elektroinstallationsdose möglich ist, nämlich durch Herausbrechen des von der Sollbruchlinie umrandeten Durchführungsbereichs. Dies macht den Einsatz der Elektroinstallationsdose sehr flexibel.

Gemäß einer bevorzugten Weiterbildung der Erfindung ist bei dem Rohradapter zwischen dem Fügebereich und dem Rohranschlussstutzen ein Umlenkbereich angeordnet, der derart ausgebildet ist, dass der heraustrennbare Wandbereich beim Einschieben des Rohradapters in die Gehäusewand derart umgelenkt wird, dass der bereits herausgetrennte Anteil des heraustrennbaren Wandbereichs von den stehenbleibenden Bereichen der Gehäusewand weg bewegt wird. Auf diese Weise ist der bereits herausgetrennte Wandbereich beim Einschieben des Rohradapters in die Gehäusewand nicht im Weg. Vielmehr wird der bereits herausgetrennte Anteil des heraustrennbaren Wandbereichs aus der Ebene der Gehäusewand kontrolliert herausbewegt, so dass ein ungestörtes Hineinschieben des Rohradapters in die Gehäusewand erfolgen kann, bis der Rohradapter in seine Endposition gelangt ist.

Grundsätzlich ist es nur erforderlich, dass der Rohradapter derartige Schneidkanten aufweist, die beim Einschieben des Rohradapters in die Gehäusewand ein Brechen der Sollbruchleisten ermöglichen. Besonders einfach wird dieses Brechen der Sollbruchleisten jedoch dadurch erzielt, dass gemäß einer bevorzugten Weiterbildung der Erfindung bei dem Rohradapter die Schneidkanten derartige Schneidschrägen aufweisen, die beim Einschieben des Rohradapters in die Gehäusewand dazu führen, dass auf den Rohradapter eine Kraftkomponente hin zum Inneren des Gehäuses wirkt. Derartige Schneidschrägen bewirken also, dass beim Einschieben des Rohradapters in die Gehäusewand der Rohradapter von außen her auf die Gehäusewand aufgedrückt wird, was nicht nur die Führung des Rohradapters beim Einschieben in die Gehäusewand erleichtert, sondern darüber hinaus, wie bei einer Messerklinge, ein vereinfachtes "Aufschneiden" der Sollbruchleisten ermöglicht.

Ganz allgemein aber insbesondere auch im Zusammenhang mit der zuvor beschriebenen Ausgestaltung ist gemäß einer bevorzugten Weiterbildung der Erfindung vorgesehen, dass bei dem Rohradapter Gleitflächen angeordnet sind, mit denen der Rohradapter beim Einschieben in die Gehäusewand an den stehenbleibenden Bereichen der Gehäusewand entlang gleitet. Auch dies vereinfacht das manuelle Einschieben des Rohradapters in die Gehäusewand und verringert im Übrigen den dafür erforderlichen Kraftaufwand. Dabei ist es ganz besonders bevorzugt, dass an den stehenbleibenden Bereichen der Gehäusewand Führungen vorgesehen sind, die mit den Gleitflächen des Rohradapters beim Einschieben in die Gehäusewand zur Führung des Rohradapters zusammenwirken.

Grundsätzlich sind keine Einrichtungen erforderlich, die den Rohradapter in seinem vollständig in die Gehäusewand eingeschobenen Zustand fixieren. Vorzugsweise sind an dem Gehäuse der Elektroinstallationsdose und an dem Rohradapter jedoch jeweils Rasteinrichtungen angeordnet, die bei vollständig in die Gehäusewand eingeschobenem Rohradapter miteinander verrastet sind. Dies macht die Anordnung besonders stabil.

Zusätzlich oder alternativ dazu ist zum Verschließen des Gehäuses ein Deckel mit einer Rohradapterfixiereinrichtung vorgesehen, die bei mit der Elektroinstallationsdose verbundenem und dabei vollständig in die Gehäusewand eingeschobenen Rohradapter beim Verschließen des Gehäuses mit dem Rohradapter formschlüssig zusammenwirkt. Auch auf diese Weise kann der Rohradapter besonders sicher in der Elektroinstallationsdose fixiert werden, was die Stabilität der Anordnung erhöht. Vorzugsweise ist dazu eine Verzapfung mit Taschen und Zapfen im Deckel bzw. der Elektroinstallationsdose vorgesehen. Außerdem ist der Deckel vorzugsweise mittels eines Filmscharniers mit dem Gehäuse verbunden. Dies stellt eine besonders preisgünstige Lösung dar, um einen unverlierbaren Deckel bereitzustellen, der einfach von seiner geöffneten in die geschlossene Stellung überführbar ist.

Nachfolgend wird die Erfindung anhand eines bevorzugten Ausführungsbeispiels der Erfindung unter Bezugnahme auf die Zeichnung im Detail erläutert. In der Zeichnung zeigen
- Fig. 1: eine Elektroinstallationsdose gemäß einem bevorzugten Ausführungsbeispiel der Erfindung in einer perspektivischen Ansicht,
- Fig. 2a und b: Details der Elektroinstallationsdose aus Fig. 1,
- Fig. 3a und b: einen Rohradapter mit einem Rohranschlussstutzen gemäß einem bevorzugten Ausführungsbeispiel der Erfindung in einer perspektivischen Ansicht bzw. im Schnitt,
- Fig. 4a bis c: die Installation eines Rohradapters an einer Elektroinstallationsdose gemäß einem bevorzugten Ausführungsbeispiel der Erfindung,

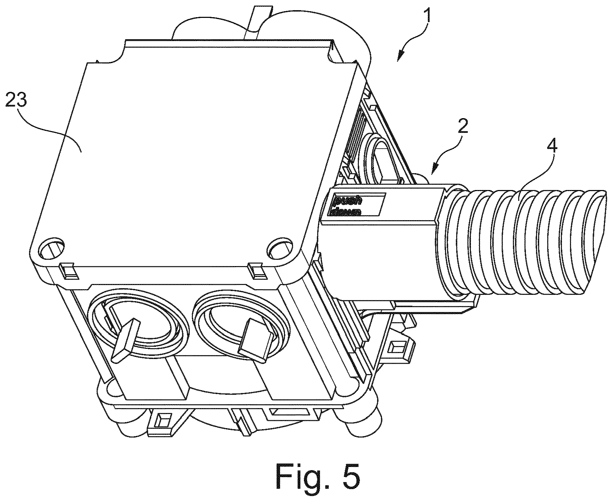

- Fig. 5: eine Anordnung mit einer Elektroinstallationsdose und einem daran angebrachten Rohradapter gemäß einem bevorzugten Ausführungsbeispiel der Erfindung und

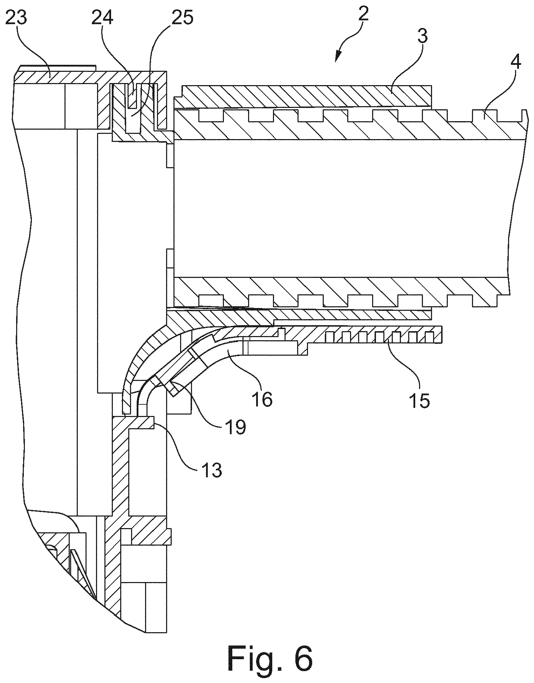

- Fig. 6: Details des Rohradapters und der Elektroinstallationsdose aus Fig. 5 im Schnitt.

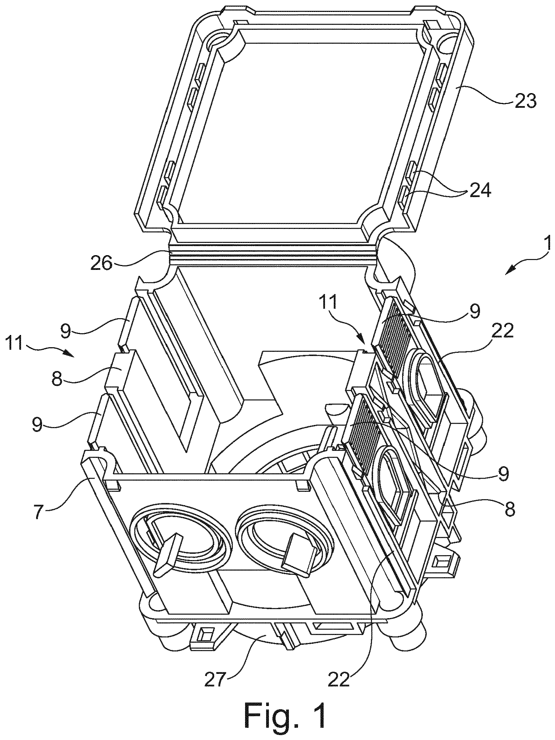

Aus Fig. 1 ist eine Elektroinstallationsdose 1 gemäß einem bevorzugten Ausführungsbeispiel der Erfindung ersichtlich. Diese Elektroinstallationsdose 1 weist ein Gehäuse 7 mit vier Gehäusewänden 8 und einem Gehäuseboden 27 auf. Mittels eines Filmscharniers 26 ist die obere Öffnung der Elektroinstallationsdose 1 mit einem Deckel 23 verschließbar.

In zwei einander gegenüberliegenden Gehäusewänden 8 sind jeweils zwei heraustrennbare Wandbereiche 9 vorgesehen. Diese sind jeweils mittels zweier parallel zueinander verlaufender Sollbruchleisten 10 an die benachbarten Bereiche der jeweiligen Gehäusewand 18 angeschlossen. Dabei erstrecken sich die Sollbruchleisten 10 jeweils beide bis zu einem gemeinsamen Rand 11 der Gehäusewand 8, nämlich dem oberen Rand, auf dem in geschlossenem Zustand der Deckel 23 zu liegen kommt.

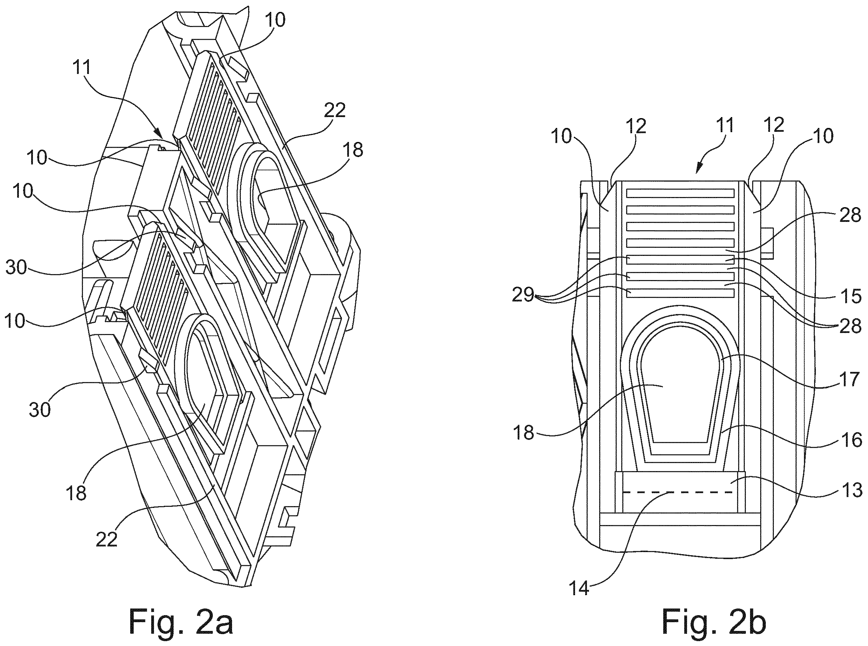

Details der Elektroinstallationsdose 1 gemäß dem bevorzugten Ausführungsbeispiel der Erfindung sind in den Fig. 2a und 2b gezeigt. Insbesondere Fig. 2b ist entnehmbar, dass die beiden Sollbruchleisten 10 im Bereich des gemeinsamen Randes 11 der Gehäusewand 8 jeweils mit einer Kerbe 12 zur Erzielung eines Bruchimpulses bei der Anbringung eines Rohradapters 2 versehen sind. Auf die Installation des Rohradapters 2 an die Elektroinstallationsdose 1 wird weiter unten im Detail eingegangen.

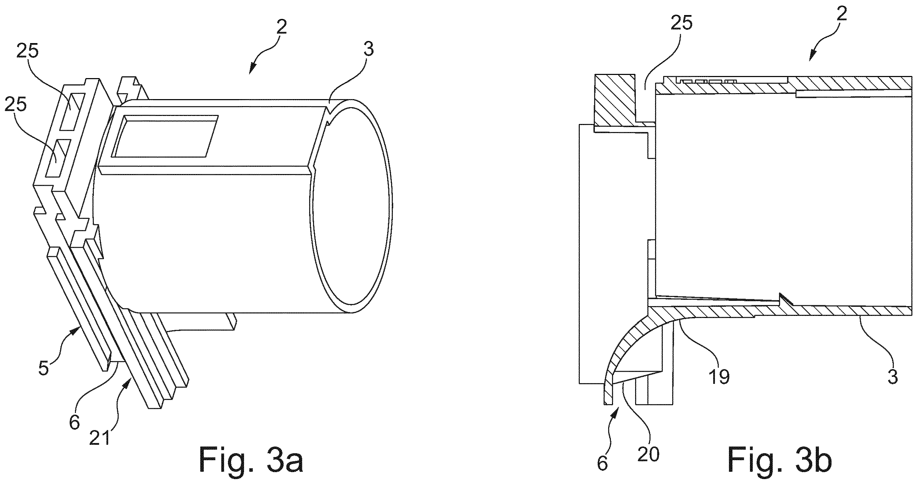

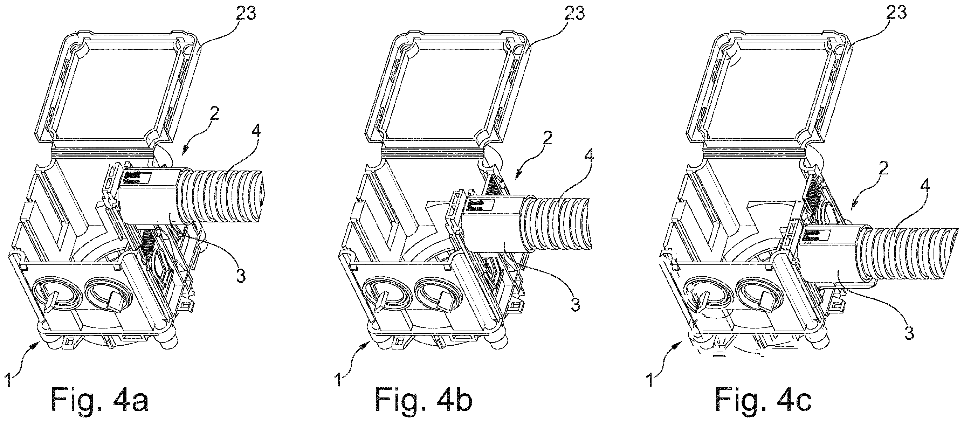

Die Anordnung gemäß dem vorliegend beschriebenen bevorzugten Ausführungsbeispiel der Erfindung weist ferner, wie in den Fig. 3a und 3b gezeigt, einen Rohradapter 2 mit einem Rohranschlussstutzen 3 auf, an den ein Leerrohr 4, wie z.B. aus den Fig. 4a bis 4c entnehmbar, angebracht werden kann. Der Rohradapter 2 weist einen Fügebereich 5 mit Schneidkanten 6 auf, um den Rohradapter 2 mit der Elektroinstallationsdose 1 verbinden zu können. Zur Verbindung des Rohradapters 2 mit der Elektroinstallationsdose 1 wird der Rohradapter 2, wie Fig. 4a entnehmbar, am gemeinsamen Rand 11 der Gehäusewand 8 am Gehäuse 7 der Elektroinstallationsdose 1 angesetzt. Wie weiter den Fig. 4b und 4c entnehmbar, wird der Rohradapter 2 dann manuell nach unten gedrückt, so dass er in die Gehäusewand 8 eingeschoben wird. Dabei kann das Leerrohr 4 bereits mit dem Rohranschlussstutzen 3 des Rohradapters 2 verbunden sein. Dies ist jedoch nicht zwingend erforderlich. Der Rohradapter 2 kann auch ohne bereits mit dem Rohranschlussstutzen 3 verbundenem Leerrohr 4 an der Elektroinstallationsdose 1 installiert werden.

Beim Einschieben des Rohradapters 2 in die Gehäusewand 8 kommt es sukzessive zum Bruch der Sollbruchleisten 10, nämlich dadurch, dass die Schneidkanten 6 die Sollbruchleisten 10 beim Hineinschieben des Rohradapters 2 in die Gehäusewand 8 durchtrennen. Damit dabei der heraustrennbare Wandbereich 9 der Gehäusewand 8 nicht im Weg ist, weist der Rohradapter 2 einen Umlenkbereich 19 auf, der derart ausgebildet ist, dass der heraustrennbare Wandbereich 9 beim Einschieben des Rohradapters 2 in die Gehäusewand 8 derart umgelenkt wird, dass der bereits herausgetrennte Anteil des heraustrennbaren Wandbereichs 9 von den stehenbleibenden Bereichen der Gehäusewand 8 weg bewegt wird.

Dies wird auch dadurch unterstützt, dass bei der Elektroinstallationsdose 1 zwischen den Sollbruchleisten 10 an ihrem dem gemeinsamen Rand 11 der Gehäusewand 8 abgewandten Enden ein Filmgelenk 13 vorgesehen ist, um dessen in Fig. 2b mit einer gestrichelten Linie angedeutete Schwenkachse 14 der heraustrennbare Wandbereich 9 beim Einschieben des Rohradapters 2 in die Gehäusewand 8 von den stehenbleibenden Bereichen der Gehäusewand 8 weggeschwenkt wird. Außerdem weist bei der Elektroinstallationsdose 1 der heraustrennbare Wandbereich 9 einen dem gemeinsamen Rand 11 zugewandten Verformungsbereich 15 auf, der beim Einschieben des Rohradapters 2 in die Gehäusewand 8 leicht verformbar ist.

Dazu weist der Verformungsbereich Rippen 29 auf, die mittels der Dünnwandbereiche 28 miteinander verbunden sind, wie insbesondere Fig. 2b entnehmbar. Auf diese Weise wird eine hohe Flexibilität des Verformungsbereichs 15 erzielt, so dass beim Einschieben des Rohradapters 2 in die Gehäusewand 8, unterstützt durch den Umlenkbereich 19 am Rohranschlussstutzen 3, der heraustrennbare Wandbereich 9 im Bereich des Verformungsbereichs 15 leicht "abgeschält" und umgelenkt werden kann.

Darüber hinaus ist ein sich an den Verformungsbereich 15 anschließender Starrbereich 16 vorgesehen, der vom gemeinsamen Rand weiter entfernt ist als der Verformungsbereich 15. Der Starrbereich 16 ist weniger leicht verformbar als der Verformungsbereich 15. Dies führt dazu, dass beim Einschieben des Rohradapters 2 in die Gehäusewand 8 dann, wenn der Umlenkbereich 19 des Rohranschlussstutzens 3 beginnt, mit dem Starrbereich 16 zusammenzuwirken, ein vollständiges Herausschwenken des Starrbereichs 16 um die Schwenkachse 14 des Filmgelenks 13 erfolgt. Der Rohradapter 2 kann dann auf sehr einfache Weise in seine Endstellung in der Gehäusewand 18 gelangen, in der dieser im Übrigen mittels an der Gehäusewand 8 vorgesehener Rastmittel 30 fest verrastet.

Zur Fixierung des Rohradapters 2 an der Elektroinstallationsdose 1 sind im oberen Bereich des Rohradapters 2 Taschen 25 vorgesehen, die mit am Deckel 23 der Elektroinstallationsdose 1 vorgesehenen Zapfen 24 im geschlossenen Zustand des Deckels 23 zusammenwirken.

Damit wird eine derartige Elektroinstallationsdose 1 bereitgestellt, die bei ihrer Auslieferung vollkommen geschlossen sein kann, ohne bereits Anschlüsse für Leerrohre 4 aufzuweisen. Allerdings weist die Elektroinstallationsdose 1 vorliegend mehrere Anschlussmöglichkeiten für Rohradapter 2 auf, mittels derer jeweils ein Leerrohr 4 angeschlossen werden kann. Die Rohradapter 2 sind dazu lediglich in eine Gehäusewand 8 einzuschieben, wobei dabei der heraustrennbarere Wandbereich 9 der Gehäusewand 8, in der der Rohradapter 2 angeordnet wird, herausgetrennt wird. Das Anbringen von Rohranschlussstutzen3 an die Elektroinstallationsdose 1 ist damit besonders einfach und eröffnet die Möglichkeit, die Elektroinstallationsdose 1 hinsichtlich der Anschlussmöglichkeiten von Leerrohren 4 flexibel auszugestalten.

### Bezugszeichenliste

- 1: Elektroinstallationsdose
- 2: Rohradapter
- 3: Rohranschlussstutzen
- 4: Leerrohr
- 5: Fügebereich
- 6: Schneidkanten
- 7: Gehäuse
- 8: Gehäusewände
- 9: heraustrennbarer Wandbereich
- 10: Sollbruchleisten
- 11: gemeinsamer Rand der Gehäusewand
- 12: Kerbe zur Erzielung eines Bruchimpulses
- 13: Filmgelenk
- 14: Schwenkachse des Filmgelenks
- 15: Verformungsbereich
- 16: Starrbereich
- 17: Sollbruchlinie
- 18: Durchführungsbereich
- 19: Umlenkbereich
- 20: Schneidschrägen
- 21: Gleitflächen des Rohradapters
- 22: Führungen an der Gehäusewand
- 23: Deckel
- 24: Zapfen
- 25: Tasche
- 26: Filmscharnier
- 27: Gehäuseboden
- 28: dünne Wandbereiche
- 29: Rippen
- 30: Rastmittel

## Patentansprüche

1. Anordnung mit einer Elektroinstallationsdose (1) und einem mit der Elektroinstallationsdose (1) verbindbaren Rohradapter (2), insbesondere für den Betoneinbau, wobei
der Rohradapter (2) einen Rohranschlussstutzen (3) zum Anschließen eines Leerrohres (4) und einen Fügebereich (5) mit Schneidkanten (6) zum Verbinden mit der Elektroinstallationsdose (1) aufweist,
die Elektroinstallationsdose (1) ein Gehäuse (7) mit mehreren Gehäusewänden (8) aufweist,
in einer Gehäusewand (8) ein heraustrennbarerer Wandbereich (9) vorgesehen ist,
der heraustrennbarere Wandbereich (9) an zwei einander gegenüberliegenden Seiten mittels parallel zueinander verlaufender Sollbruchleisten (10) an die benachbarten Bereiche der Gehäusewand (8) angeschlossen ist und
die Sollbruchleisten (10) sich beide bis zu einem gemeinsamen Rand (11) der Gehäusewand (8) hin erstrecken, so dass
der Rohradapter (2) in einer Orientierung, in der der Rohranschlussstutzen (3) von dem Gehäuse (7) weg weist, mit jeweils einer Schneidkante (6) am gemeinsamen Rand (11) der Gehäusewand (8) an jeweils eine Sollbruchleiste (10) ansetzbar, längs der beiden Sollbruchleisten (10) unter Heraustrennen des heraustrennbareren Wandbereichs (9) in die Gehäusewand (8) einschiebbar und auf diese Weise an die Elektroinstallationsdose (1) anschließbar ist.

2. Anordnung nach Anspruch 1, **dadurch gekennzeichnet, dass** bei der Elektroinstallationsdose (1) die Sollbruchleisten (10) am gemeinsamen Rand (11) der Gehäusewand (8) jeweils mit einer Kerbe (12) zur Erzielung eines Bruchimpulses beim Einschieben des Rohradapters (2) in die Gehäusewand (8) versehen sind.

3. Anordnung nach Anspruch 1 oder 2, **dadurch gekennzeichnet, dass** bei der Elektroinstallationsdose (1) zwischen den Sollbruchleisten (10) an ihrem dem gemeinsamen Rand (11) der Gehäusewand (8) abgewandten Enden ein Filmgelenk (13) vorgesehen ist, um dessen Schwenkachse (14) der heraustrennbarere Wandbereich (9) beim Einschieben des Rohradapters (2) in die Gehäusewand (8) von den stehenbleibenden Bereichen der Gehäusewand (8) weggeschwenkt wird.

4. Anordnung nach einem der Ansprüche 1 bis 3, **dadurch gekennzeichnet, dass** bei der Elektroinstallationsdose (1) der heraustrennbare Wandbereich (8) einen dem gemeinsamen Rand (11) zugewandten Verformungsbereich (15) aufweist, der beim Einschieben des Rohradapters (2) in die Gehäusewand (8) leichter verformbar ist als ein sich an den Verformungsbereich (15) anschließender, vom gemeinsamen Rand (11) weiter entfernter Starrbereich (16).

5. Anordnung nach Anspruch 4, **dadurch gekennzeichnet, dass** der Starrbereich (16) einen von einer Sollbruchlinie (17) umrandeten Durchführungsbereich (18) aufweist.

6. Anordnung nach einem der Ansprüche 1 bis 5, **dadurch gekennzeichnet, dass** bei dem Rohradapter (2) zwischen dem Fügebereich (5) und dem Rohranschlussstutzen (3) ein Umlenkbereich (19) angeordnet ist, der derart ausgebildet ist, dass der heraustrennbare Wandbereich (9) beim Einschieben des Rohradapters (2) in die Gehäusewand (8) derart umgelenkt wird, dass der bereits herausgetrennte Anteil des heraustrennbaren Wandbereichs (9) von den stehenbleibenden Bereichen der Gehäusewand (8) wegbewegt wird.

7. Anordnung nach einem der Ansprüche 1 bis 6, **dadurch gekennzeichnet, dass** bei dem Rohradapter (2) die Schneidkanten (6) derartige Schneidschrägen (20) aufweisen, die beim Einschieben des Rohradapters (2) in die Gehäusewand (8) dazu führen, dass auf den Rohradapter (2) eine Kraftkomponente hin zum Inneren des Gehäuses (8) wirkt.

8. Anordnung nach einem der Ansprüche 1 bis 7, **dadurch gekennzeichnet, dass** beim dem Rohradapter (2) Gleitflächen (21) vorgesehen sind, mit denen der Rohradapter (2) beim Einschieben in die Gehäusewand (8) an den stehenbleibenden Bereichen der Gehäusewand (8) entlanggleitet.

9. Anordnung nach Anspruch 8, **dadurch gekennzeichnet, dass** an den stehenbleibenden Bereichen der Gehäusewand (8) Führungen (22) vorgesehen sind, die mit den Gleitflächen (21) des Rohradapters (2) beim Einschieben in die Gehäusewand (8) zur Führung des Rohradapters (2) zusammenwirken.

10. Anordnung nach einem der Ansprüche 1 bis 9, **dadurch gekennzeichnet, dass** zum Verschließen des Gehäuses (7) ein Deckel (23) mit einer Rohradapterfixiereinrichtung vorgesehen ist, die bei mit der Elektroinstallationsdose (1) verbundenem und dabei vollständig in die Gehäusewand (8) eingeschobenem Rohradapter (2) beim Verschließen des Gehäuses (7) mit dem Rohradapter (2) formschlüssig zusammenwirkt.

## Claims

1. An assembly comprising an electrical installation box (1) and a ducting adapter (2) connectable to the electrical installation box (1), in particular for concrete placement, wherein
the ducting adapter (2) has a ducting connection piece (3) for the attachment of ducting (4) and a joining region (5) with cutting edges (6) for connection to the electrical installation box (1),
the electrical installation box (1) has a housing (7) with a plurality of housing walls (8),
a removable wall region (9) is provided in one housing wall (8).
the removable wall region (9) is attached on two mutually opposed sides to the adjacent regions of the housing wall (8) by means of predetermined breaking strips (10) running parallel to one another, and
the predetermined breaking strips (10) both extend as far as a common edge (11) of the housing wall (8), so that
the ducting adapter (2), in an orientation in which the ducting connection piece (3) points away from the housing (7), may be placed with the cutting edges (6), at the common edge (11) of the housing wall (8), one each against a predetermined breaking strip (10), may be inserted into the housing wall (8) along the two predetermined breaking strips (10) with removal of the removable wall region (9), and in this way may be attached to the electrical installation box (1).

2. The assembly according to claim 1, **characterised in that**, in the electrical installation box (1), the predetermined breaking strips (10) are each provided at the common edge (11) of the housing wall (8) with a notch (12) for initiating the breaking as the ducting adapter (2) is inserted into the housing wall (8).

3. The assembly according to claim 1 or 2, **characterised in that**, in the electrical installation box (1), a living hinge (13) is provided between the predetermined breaking strips (10) at their ends farthest away from the common edge (11) of the housing wall (8), and the removable wall region (9) is pivoted about the pivot axis (14) of said hinge, away from the regions of the housing wall (8) that remain permanently in place, as the ducting adapter (2) is inserted into the housing wall (8).

4. The assembly according to any one of claims 1 to 3, **characterised in that**, in the electrical installation box (1), the removable wall region (8) has a deformation region (15) facing the common edge (11), which deformation region is more easily deformable as the ducting adapter (2) is inserted into the housing wall (8) than a rigid region (16) adjoining the deformation region (15) and distanced further from the common edge (11).

5. The assembly according to claim 4, **characterised in that** the rigid region (16) has a feedthrough region (18) surrounded by a predetermined breaking line (17).

6. The assembly according to any one of claims 1 to 5, **characterised in that**, in the ducting adapter (2), a deflection region (19) is arranged between the joining region (5) and the ducting connection piece (3) and is designed in such a way that the removable wall region (9), as the ducting adapter (2) is inserted into the housing wall (8), is deflected in such a way that the part of the separable wall region (9) that has already been separated is moved away from the regions of the housing wall (8) that remain permanently in place.

7. The assembly according to any one of claims 1 to 6, **characterised in that**, in the ducting adapter (2), the cutting edges (6) have cutting slopes (20) which, as the ducting adapter (2) is inserted into the housing wall (8), cause a force component to act on the ducting adapter (2) towards the inside of the housing (8).

8. The assembly according to any one of claims 1 to 7, **characterised in that**, in the ducting adapter (2), sliding faces (21) are provided, by means of which the ducting adapter (2), as it is inserted into the housing wall (8), slides along the regions of the housing wall (8) that remain permanently in place.

9. The assembly according to claim 8, **characterised in that** guides (22) are provided on the regions of the housing wall (8) that remain permanently in place, which guides cooperate with the sliding faces (21) of the ducting adapter (2) as this is inserted into the housing wall (8), in order to guide the ducting adapter (2) .

10. The assembly according to any one of claims 1 to 9, **characterised in that** a cover (23) with a ducting adapter fixing device is provided in order to close the housing (7), which ducting adapter fixing device, when the ducting adapter (2) is connected to the electrical installation box (1) and in so doing is fully inserted in the housing wall (8), cooperates interlockingly with the ducting adapter (2) as the housing (7) is closed.

## Revendications

1. Agencement doté d'un boitier d'installation électrique (1) et d'un adaptateur de tube (2) pouvant être relié avec le boitier d'installation électrique (1), notamment pour l'installation dans du béton, dans lequel
l'adaptateur de tube (2) présente un support de raccordement de tube (3) permettant le raccordement d'un tube vide (4) et d'une zone de jonction (5) avec des bords coupants (6) pour la connexion avec le boitier d'installation électrique (1),
le boitier d'installation électrique (1) présente un boitier (7) avec plusieurs parois de boitier (8),
une zone de paroi (9) séparable est prévue dans une paroi de boitier (8),
la zone de paroi (9) séparable est jointe au niveau de deux côtés opposés l'un à l'autre au moyen de bandelettes à rupture souhaitée (10) s'étendant parallèlement les unes par rapport aux autres à des zones voisines de la paroi de boitier (8), et
les bandelettes à rupture souhaitée (10) s'étendent toutes deux jusqu'à un bord commun (11) de la paroi de boitier (8), de sorte que
l'adaptateur de tube (2), dans une orientation dans laquelle le support de raccordement de tube (3) pointe hors du boitier (7), peut être mis en place sur respectivement une bandelette à rupture souhaitée (10) avec respectivement un bord coupant (6) sur le bord commun (11) de la paroi de boitier (8), peut être inséré dans la paroi de boitier (8) le long des deux bandelettes à rupture souhaitée 10) en détachant la zone de paroi (9) séparable et peut être raccordé de cette manière au boitier d'installation électrique (1).

2. Agencement selon la revendication 1, **caractérisé en ce que**, dans le cas du boitier d'installation électrique (1), les bandelettes à rupture souhaitée (10) sur le bord commun (11) de la paroi de boitier (8) sont respectivement pourvues d'une encoche (12) permettant l'établissement d'une impulsion de rupture lors de l'insertion de l'adaptateur de tube (2) dans la paroi de boitier (8).

3. Agencement selon la revendication 1 ou la revendication 2, **caractérisé en ce que**, dans le cas du boitier d'installation électrique (1), entre les bandelettes à rupture souhaitée (10) au niveau des extrémités opposées au bord commun (11) de la paroi de boitier (8), est prévue une articulation sous forme de film (13) avec son axe de pivotement (14), autour duquel la zone de paroi séparable (9) peut être pivotée pour s'éloigner des zones de la paroi de boitier (8) restant fixes lors de l'insertion de l'adaptateur de tube (2) dans la paroi de boitier (8).

4. Agencement selon l'une des revendications 1 à 3, **caractérisé en ce que**, dans le cas du boitier d'installation électrique (1), la zone de paroi séparable (8) présente une zone de déformation (15) orientée vers le bord commun (11) qui peut être déformée plus facilement lors de l'insertion de l'adaptateur de tube (2) dans la paroi de boitier (8) qu'une zone rigide (16) davantage éloignée du bord commun (11), adjacente à la zone de déformation (15).

5. Agencement selon la revendication 4, **caractérisé en ce que** la zone rigide (16) présente une zone de passage (18) entourée d'une ligne de rupture souhaitée (17).

6. Agencement selon l'une des revendications 1 à 5, **caractérisé en ce que**, dans le cas de l'adaptateur de tube (2), entre la zone de jonction (5) et le support de raccordement de tube (3), une zone de déviation (19) est disposée, qui est conçue de telle manière que la zone de paroi séparable (9) est déviée lors de l'insertion de l'adaptateur de tube (2) dans la paroi de boitier (8) de telle manière que la partie déjà détachée de la zone de paroi séparable (9) est enlevée des zones de la paroi de boitier (8) restant fixes.

7. Agencement selon l'une des revendications 1 à 6, **caractérisé en ce que**, dans le cas de l'adaptateur de tube (2), les bords coupants (6) présentent des encoches de coupure (20) telles que, lors de l'insertion de l'adaptateur de tube (2) dans la paroi de boitier (8), elles font en sorte qu'une composante de force agit sur l'adaptateur de tube (2) jusqu'à l'intérieur du boitier (8).

8. Agencement selon l'une des revendications 1 à 7, **caractérisé en ce que**, dans le cas de l'adaptateur de tube (2), des surfaces de glissement (21) sont prévues, à l'aide desquelles l'adaptateur de tube (2) glisse le long des zones de la paroi de boitier (8) restant fixes lors de l'insertion dans la paroi de boitier (8).

9. Agencement selon la revendication 8, **caractérisé en ce que**, dans les zones de la paroi de boitier (8) restant fixes, des guides (22) sont prévus, qui agissent conjointement avec les surfaces de glissement (21) de l'adaptateur de tube (2) pour le guidage de l'adaptateur de tube (2) lors de l'insertion dans la paroi de boitier (8).

10. Agencement selon l'une des revendications 1 à 9, **caractérisé en ce que**, pour la fermeture du boitier (7), un couvercle (23) avec un dispositif de fixation d'adaptateur de tube est prévu, qui agit par complémentarité des formes conjointement avec l'adaptateur de tube (2) lorsque l'adaptateur de tube (2) est relié avec le boitier d'installation électrique (1) et est ainsi totalement inséré dans la paroi de boitier (8) lors de la fermeture du boitier (7) .
